# EUROPEAN PATENT APPLICATION

(11) **EP 1 387 534 A1**
(43) Date of publication of application: **04.02.2004**
(21) Application number: 03015614.5
(22) Date of filing: 16.07.2003
(51) Int. Cl.: H04L 12/56

(54) **System and method for determining the shortest path between a pair of nodes in an equal cost network**

(30) Priority: 30.07.2002 US 399611 P; 23.12.2002 US 328359
(71) Applicant: ALCATEL, 75008 Paris (FR)
(72) Inventor: Desai, Snehal, Richardson, TX 75081 (US); Verchere, Dominique, 71170 Chaffailles (FR)
(74) Representative: Dreiss, Fuhlendorf, Steimle & Becker

(57) **Abstract**

A technique for determining the shortest path between an ingress node and an egress node in a digital network is described. In a first half of a search loop of a Simultaneous Immediate Neighbor ("SIN") comparison scheme, a list of immediate neighbors of the ingress node (the "INL") is determined. In a second half of the search loop, a list of immediate neighbors of the egress node (the "ENL") is determined. Each node maintains a flag indicating whether it has been included in an INL or ENL and a variable indicating by which node it was included. The method terminates when one side detects a node flagged by the opposite side, in which case the shortest path is determined, or when the INL or the ENL is empty. A set of m successive INLs and n successive ENLs (where m and n are non-zero integer values) are computed in sequence until the method terminates.

## Description

### BACKGROUND OF THE INVENTION

### Technical Field of the Invention

The present invention generally relates to digital communications networks. More particularly, and not by way of any limitation, the present invention is directed to a method of determining the shortest path between a pair of nodes in an equal cost digital communications network.

### Description of Related Art

In a digital network in which all links are assumed to have the same cost, it is often necessary to calculate the shortest path between any given pair of nodes in the network. As used herein, the "shortest path" is the path that comprises the fewest number of hops. For obvious reasons, the more quickly this calculation can be performed, the better.

Currently, the best known methods of calculating the shortest path between a pair of nodes in a digital network is to apply algorithms similar to the standard Breadth First Search ("BFS") or Dijkstra's Shortest Path First ("SPF"). Although the BFS and SPF algorithms do in fact provide a solution for the given problem (i.e., calculating the shortest path between a given pair of nodes), they leave some room for improvement when both the given pair of nodes for which the shortest path needs to be found are known from the start. What is needed is a method of computing the shortest path between a given pair of nodes in an equal cost link network that increases the speed with which the path is calculated and reduces the number of nodes traversed for that purpose.

### SUMMARY OF THE INVENTION

Accordingly, the present invention advantageously provides a technique for determining the shortest path between a given pair of nodes comprising an ingress node and an egress node in an equal cost link digital network in which all nodes are uniquely identified. In one embodiment, the invention comprises a Simultaneous Immediate Neighbor ("SIN") comparison method that determines a set of immediately adjacent neighbors of each end node in sequence and iteratively, with progress based on a "consistent states" approach, meaning that during each iteration of the search loop, the immediate neighbor frontier moves consistently by one hop from each side.

In particular, in a first half of a search loop of the SIN comparison method, a list of immediate neighbors of the ingress node, referred to as an Ingress Neighbor List, or "INL", is determined. In a second half of the search loop, a list of immediate neighbors of the egress node, referred to as an Egress Neighbor List, or "ENL", is determined. A node may be included in a Neighbor List if an only if it has not been included in any other Neighbor List during the process. This is ensured by tagging each node once it is included in a Neighbor List with a flag indicating the side that included the node. Additionally, when a node is included in any Neighbor List, it includes an indication of the previous node from which it was considered.

The method terminates when one side detects a node with the flag of the opposite side or when either the INL or ENL is empty. If the method does not terminate, a new INL is computed. The new INL will include all nodes immediately adjacent to the nodes of the old INL, with the same condition of inclusion as previously stated. A new ENL is similarly computed. The step of computing successive new INLs and ENLs in sequence is repeated until one of the termination conditions set forth above is satisfied. The SIN comparison method is guaranteed to terminate even if no path exists between the ingress and egress nodes.

### BRIEF DESCRIPTION OF THE DRAWINGS

A more complete understanding of the present invention may be had by reference to the following Detailed Description when taken in conjunction with the accompanying drawings wherein:

FIGS. 1 and 2 respectively illustrate first and second halves of a complete loop of a SIN comparison method according to one embodiment of the present invention; and

FIGS. 3A-3E illustrate an exemplary application of the SIN comparison method illustrated in FIGS. 1 and 2.

### DETAILED DESCRIPTION OF THE DRAWINGS

In the drawings, like or similar elements are designated with identical reference numerals throughout the several views thereof, and the various elements depicted are not necessarily drawn to scale.

As used herein, "I" and "E" respectively designate an ingress node and an egress node of a particular node pair. It will be recognized that, although for the purposes of this document, the two given nodes are identified as "I" for ingress node and "E" for egress node, respectively, in the method, the two are interchangeable without loss of generality. It will also be recognized that the method can be applied to any two nodes of a network and is not limited to application to an ingress/egress node pair; however, for purposes of simplicity and example, the method will be described with reference to such a pair.

The SIN comparison method of determining the shortest path described herein is based on the certain assumptions. First, all nodes in the network are uniquely identified. In addition, all links on the network have the same cost. Finally, each node in the network topology has certain data structures associated with it. Specifically, each node maintains a list of immediate neighbors known as a "Neighbor List" or "NL", each node maintains variables designated "PREVIOUS NODE" that identify the previous node in the path and that are initialized to "0", and each node maintains a flag designated "INCLUDE" that is set to "N" if neither side has considered this node (initial value), "I" if it has already been considered by the ingress side, or "E" if it has already been considered by the egress side.

Additionally, four lists are initialized. These lists include an old Ingress Neighbor List ("old INL" or "oldINL"), which is initialized to {I}, an old Egress Neighbor List ("old ENL" or "oldENL"), which is initialized to {E}, a new Ingress Neighbor List ("new INL" or "newINL"), which is initialized to { } (empty), and a new Egress Neighbor List ("new ENL" or "newENL"), which is initialized to { } (empty).

As will be described hereinbelow, during each iteration of a path search loop, the new INL and the new ENL are built from the old INL and the old ENL, respectively. The calculation of the new INL and the new ENL, without any redundancies, is described below.

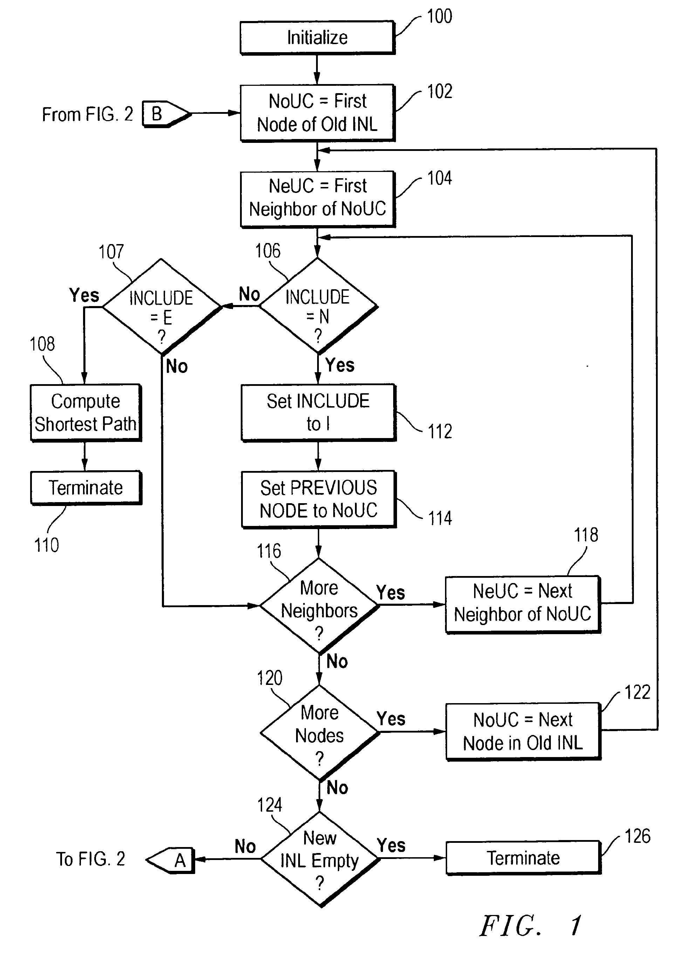

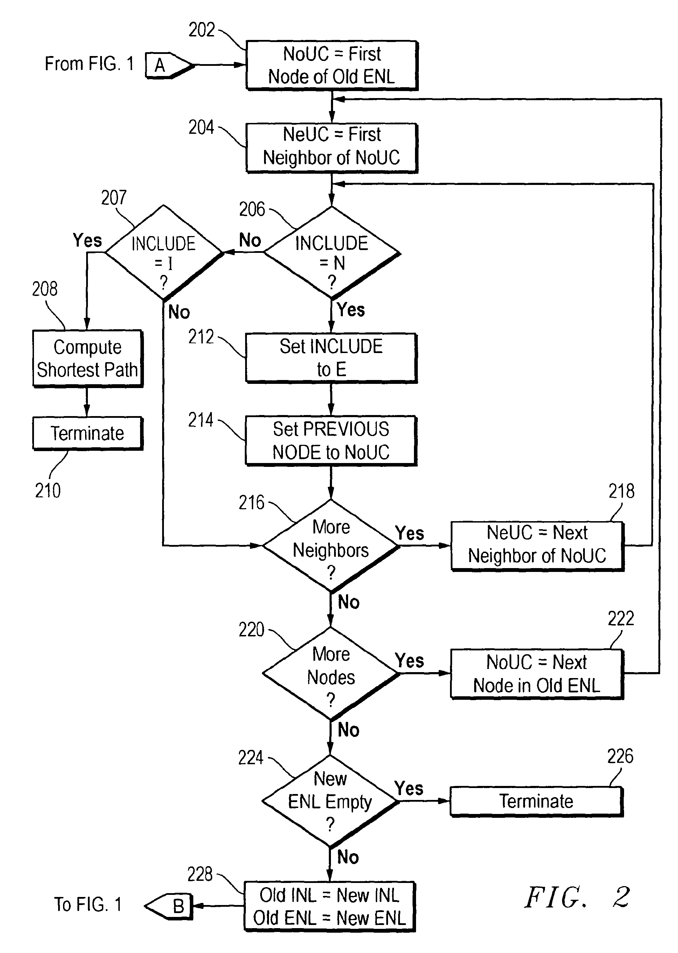

FIG. 1 is a flowchart illustrating a method of calculating the new INL from the old INL, which comprises a first half of the search loop of the SIN comparison method of one embodiment. In step 100, the four lists are initialized as described above. Additionally, the INCLUDE flag and PREVIOUS NODE variable of each node are initialized as described above. In particular, four lists are initialized, the old INL is initialized to {I}, the old ENL is initialized to {E}, the new INL is initialized to { } (empty), and the new ENL is initialized to { } (empty). For each node, the INCLUDE flag is initialized to "N" and the PREVIOUS NODE variable is initialized to 0.

In step 102, the node under consideration ("NoUC") is set to a first node of the old INL. In step 104, the neighbor under consideration ("NeUC") is set to a first neighbor of the neighbor list maintained by the NoUC. In step 106, a determination is made whether the INCLUDE flag of the NeUC is set to "N". If not, execution proceeds to step 107, in which a determination is made whether the INCLUDE flag of the NeUC is set to "E". If a positive determination is made in step 107, execution proceeds to step 108, in which the shortest path is calculated is calculated using the information stored in the PREVIOUS NODE variable of the NeUC and NoUC, and then to step 110, in which execution terminates because the shortest path has been found.

If a positive determination is made in step 106, execution proceeds to step 112, in which the INCLUDE flag is set to "I". In step 114, the PREVIOUS NODE variable is set to identify the NoUC. Execution of the operations described in steps 112 and 114 result in the NeUC being included in the new INL. Upon completion of step 114 or if in step 107 a negative determination is made, execution proceeds to step 116. In step 116, a determination is made whether there are more neighbors of the NoUC to be considered. If so, execution proceeds to step 118, in which NeUC is set to the next neighbor of the NoUC, and then returns to step 106.

If a negative determination is made in step 116, execution proceeds to step 120, in which a determination is made whether there are more nodes in the old INL to be considered. If so, execution proceeds to step 122, in which the NoUC is set to the next node of the old INL, and then returns to step 104. If a negative determination is made in step 120, execution proceeds to step 124, in which a determination is made whether the new INL is empty. If so, then no path exists and execution terminates in step 126; otherwise, execution proceeds to step 202 (FIG. 2) to begin calculation of the new ENL.

FIG. 2 is a flowchart illustrating a method of calculating the new ENL from the old ENL, which comprises a second half of the search loop of the SIN comparison method of one embodiment. In step 202, the node under consideration ("NoUC") is set to a first node of the old ENL. In step 204, the neighbor under consideration ("NeUC") is set to a first neighbor of the neighbor list maintained by the NoUC. In step 206, a determination is made whether the INCLUDE flag of the NeUC is set to "N". If not, execution proceeds to step 207, in which a determination is made whether the INCLUDE flag of the NeUC is set to I. If a positive determination is made in step 207, execution proceeds to step 208, in which the shortest path is calculated using the information stored in the PREVIOUS NODE variables of the NeUC and NoUC, and then to step 210, in which execution terminates because the shortest path has been found.

If a positive determination is made in step 206, execution proceeds to step 212, in which the INCLUDE flag is set to "E". In step 214, the PREVIOUS NODE variable is set to identify the NoUC. Execution of the operations described in steps 212 and 214 result in the NeUC being included in the new ENL. Upon completion of step 214 or responsive to a negative determination in step 207, execution proceeds to step 216. In step 216, a determination is made whether there are more neighbors of the NoUC to be considered. If so, execution proceeds to step 218, in which NeUC is set to the next neighbor of the NoUC, and then returns to step 206.

If a negative determination is made in step 216, execution proceeds to step 220, in which a determination is made whether there are more nodes in the old ENL to be considered. If so, execution proceeds to step 222, in which the NoUC is set to the next node of the old ENL, and then returns to step 204. If a negative determination is made in step 220, execution proceeds to step 224, in which a determination is made whether the new ENL is empty. If so, then no path exists and execution terminates in step 226; otherwise, execution proceeds to step 228, in which old INL is set to new INL and old ENL is set to new ENL. Execution then loops back to step 102 (FIG. 1) to begin calculation of a new INL.

It will be recognized that the operations illustrated in and described with reference to FIGS. 1 and 2 will typically be implemented as computer-executable instructions. Accordingly, exemplary pseudocode for executing the operations illustrated in and described with reference to FIGS. 1 and 2 is set forth below:

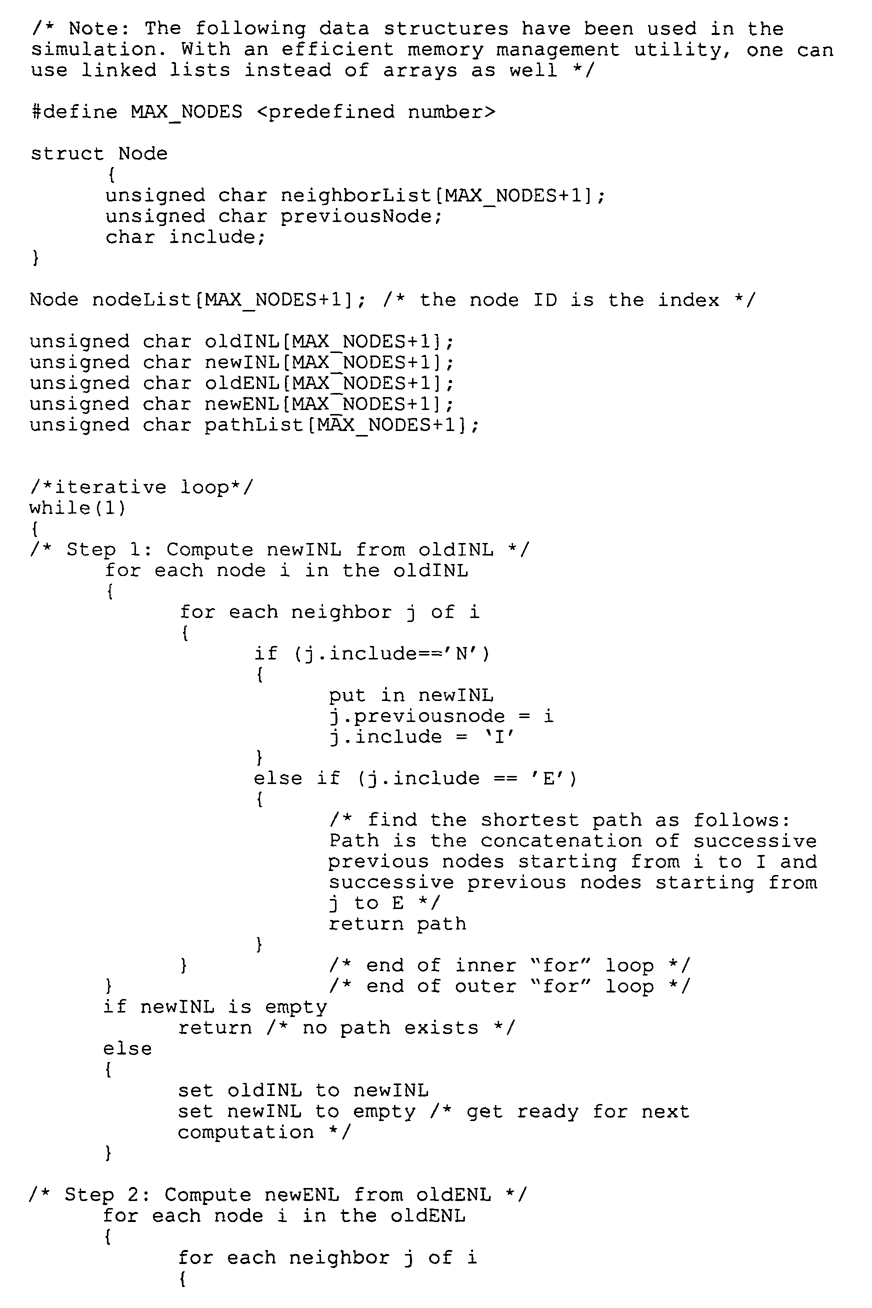

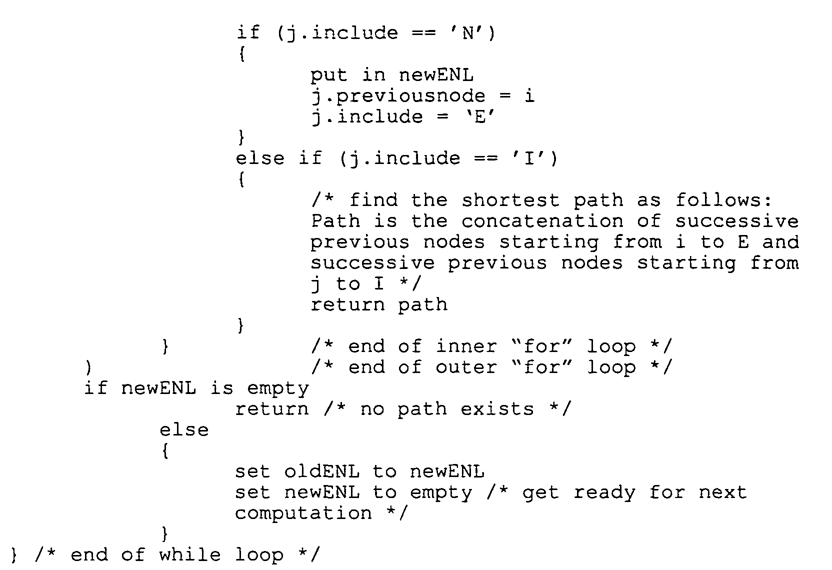

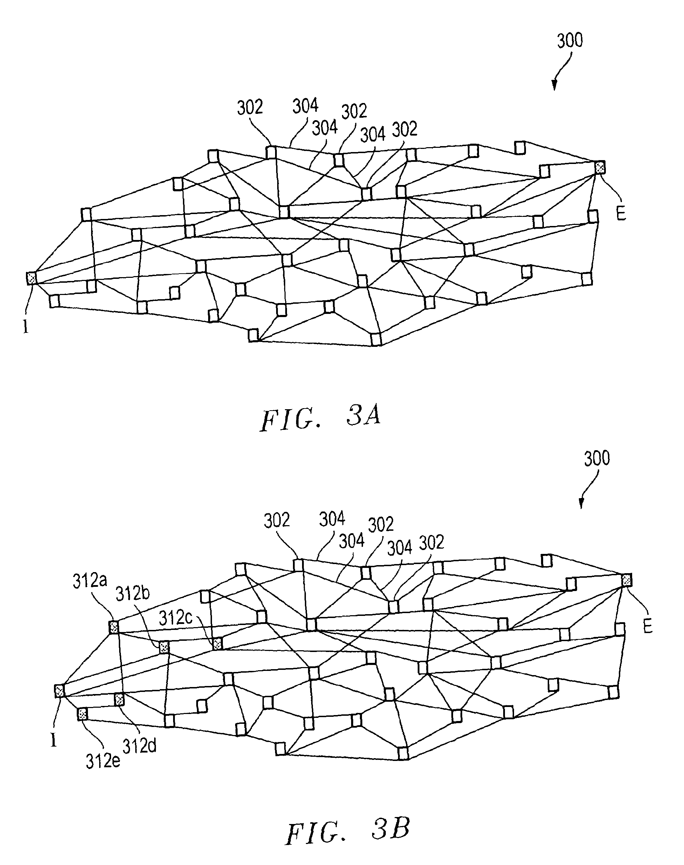

FIGS. 3A-3E each illustrate an equal cost digital network 300 comprising 40 uniquely identifiable nodes, such as nodes 302, interconnected by digital communications links, such as links 304. FIGS. 3A-3E will be used to illustrate the method of one embodiment of the SIN comparison method of the present invention, as illustrated in FIGS. 1 and 2, for determining the shortest path between a node pair comprising an ingress node I and an egress node E. FIG. 3A illustrates the network 300 before the search loop illustrated in FIGS. 1 and 2 has been applied.

FIG. 3B illustrates the network 300 subsequent to the first application of the first half of the search loop of the SIN comparison method. In particular, FIG. 3B illustrates the network 300 after steps 100-126 have been executed for the first time and a new INL for the ingress node I has been determined. As shown in FIG. 3B, at this point, the new INL, which includes all of the nodes immediately adjacent to the ingress node I, includes five nodes 312a-312e. A total of five comparisons have been performed to reach the point illustrated in FIG. 3B.

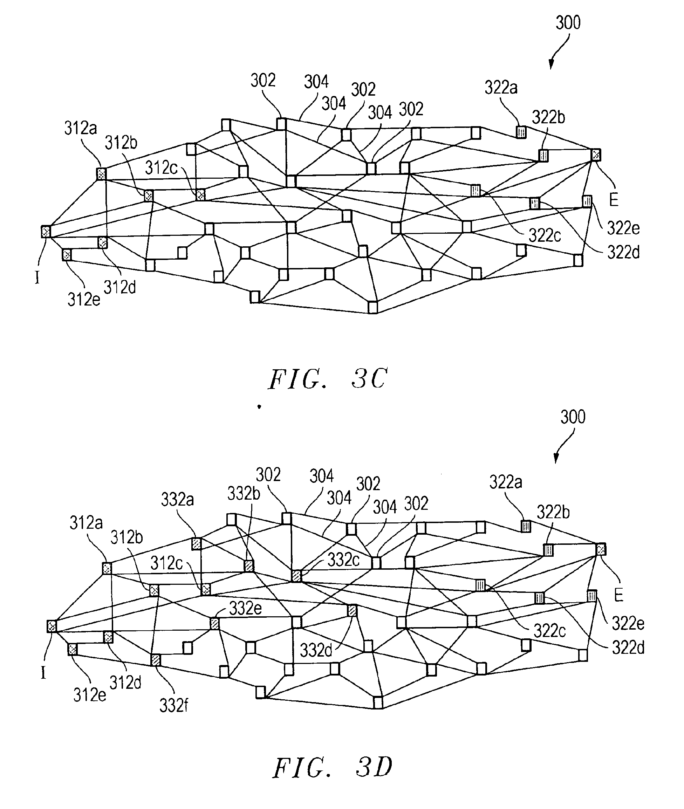

FIG. 3C illustrates the network 300 subsequent to the first application of the second half of the search loop of the SIN comparison method. In particular, FIG. 3C illustrates the network 300 after steps 202-224 have been executed for the first time and a new ENL for the egress node 304 has been determined. As shown in FIG. 3C, at this point, the new ENL, which includes all of the nodes immediately adjacent to the egress node 304, includes five nodes 322a-322e. A total of ten comparisons have been performed to reach the point illustrated in FIG. 3C.

At this point, in step 228 (FIG. 2), the new INL and new ENL illustrated in FIGS. 3B and 3C are deemed the old INL and old ENL, respectively. The first half of the search loop (FIG. 1) is then reapplied, as illustrated below.

FIG. 3D illustrates the network 300 after the second application of the first half of the search loop and after determination of a second new INL. As shown in FIG. 3D, at this point, the second new INL, which includes all of the nodes immediately adjacent to nodes of the old INL (i.e., nodes 312a-312e), includes six nodes 332a-332f. A total of 52 comparisons have been performed to reach the point illustrated in FIG. 3D.

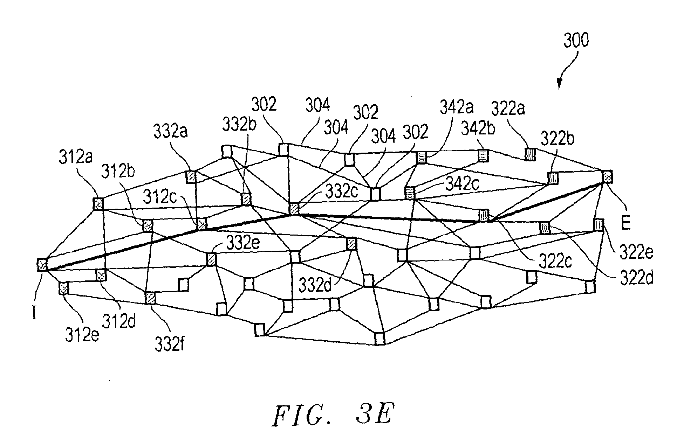

FIG. 3E illustrates the network 300 after the second application of the second half of the search loop and after determination of a second new ENL. The immediate neighbors of the first two nodes 322a, 322b, of the old ENL include three nodes 342a-342c. As shown in FIG. 3E, while computing the immediate neighbors of the third node of the old ENL, i.e., the node 322c, a node 332c is detected that was already marked by a node of the opposite side (i.e., the node 312c). Accordingly, a termination condition is satisfied and the shortest path is determined (i.e., steps 208 and 210 (FIG. 2)). Nineteen additional comparisons, for a total of 71 comparisons, have been performed to reach the point illustrated in FIG. 3E.

The shortest path between the ingress node I and the egress node E is easily computed after the first overlap detection by using the information stored in the PREVIOUS NODE variable of each node. In particular, the PREVIOUS NODE variable of the shared node 332c identifies the node 312c. The PREVIOUS NODE variable of the node 312c identifies the ingress node I. Heading the opposite direction from the shared node 332c, the node that identified the shared node as such is the node 322c. The PREVIOUS NODE variable of the node 322c identifies the egress node E. Accordingly, the shortest path through the network 300 from the ingress node I to the egress node E comprises the nodes I, 312c, 332c, 322c, and E, as well as the links therebetween. In the 40-node network 300, the shortest path was found after fewer than 80 comparisons.

Empirical data on grid topologies has demonstrated that fewer than 2N comparisons are required to compute the shortest path between any two nodes of a network containing N nodes using the method of the embodiments described herein. Analytically, it can be shown that the computational complexity of the SIN comparison method is not greater than O(N+E), where E is the total number of edges of the graph representing the network.

The SIN comparison method can also be extended as follows. Instead of alternative computations of the ingress and egress frontiers (i.e., the INL and ENL), m successive ingress frontiers followed by n successive egress frontiers, where m and n are non-zero integers, can be calculated. The parameters m and n could be preconfigured or computed on-the-fly. It can be formally demonstrated that the SIN comparison method is not guaranteed to work when either m or n or both are non-integers.

The SIN comparison method can also be generalized such that once a frontier is computed, a decision is made whether to compute the next frontier from the same side or the opposite side. Such a decision can be based on a number of criteria. One such criteria is to compare the size of the ingress frontier (i.e., in terms of the number of nodes it contains) with the size of the egress frontier and only compute the next frontier from the opposite side if it has a smaller number of nodes. Accordingly, the exemplary pseudocode previously described can easily be modified to implement the SIN comparison method using a decision-based frontier progression scheme. The modified pseudocode for implementing this scheme is set forth below:

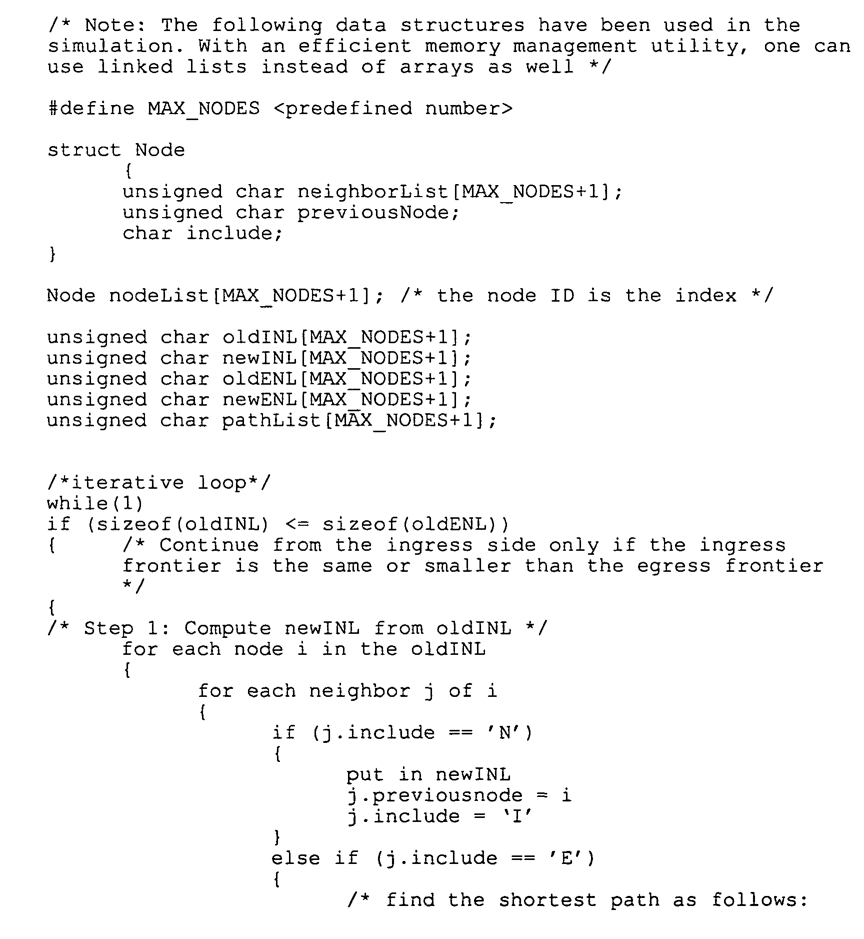

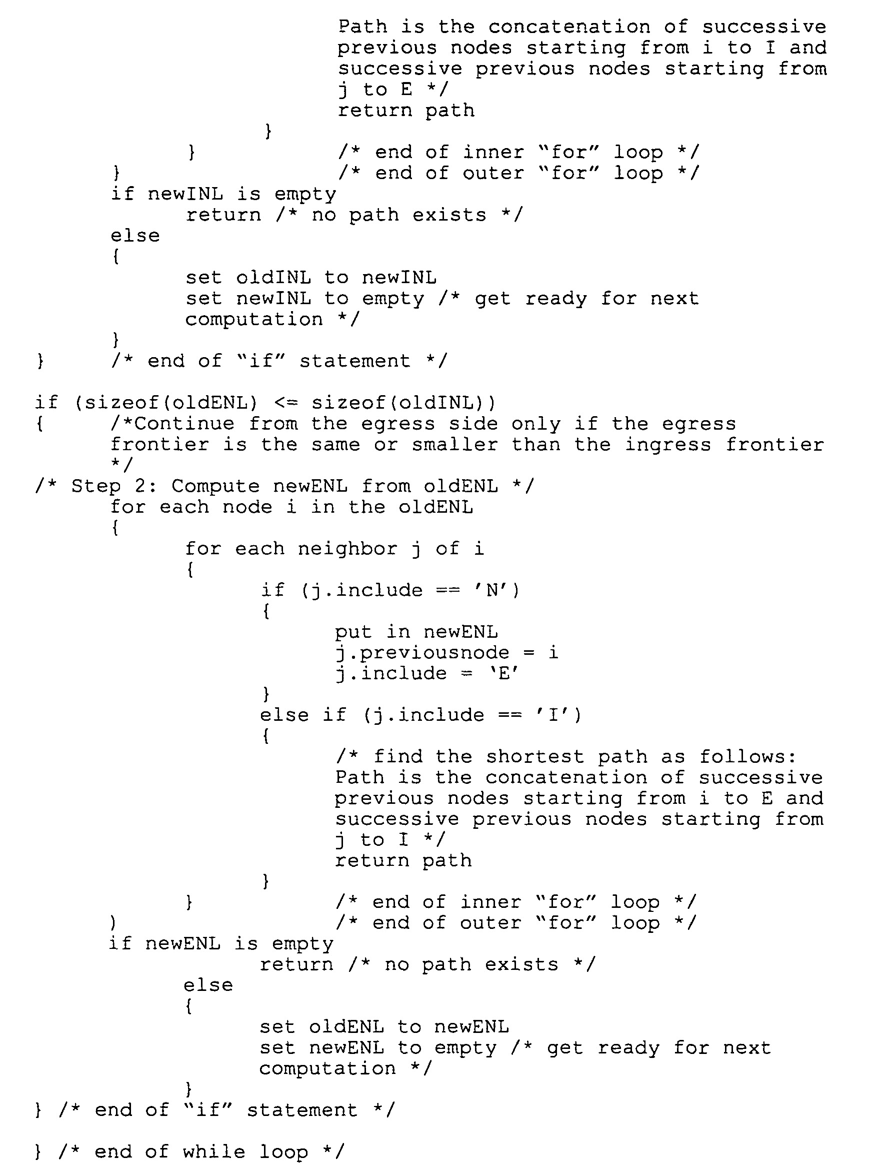

Another criteria for deciding the side from which the next frontier should be computed is to compare the total number of neighbors adjacent to each frontier and proceed from the opposite side only if it has a smaller number of adjacent neighbors. In order to achieve this, two additional variables identified as "totalIngressNeighbors" and "totalEgressNeighbors" are introduced to keep track of the total number of neighbors adjacent to the ingress and egress frontiers, respectively. Both of these variables are initialized to zero. Additionally, a variable called "totalNeighbors" is introduced, which is assigned to each node in the topology and is set to the number of neighbors immediately adjacent to the given node. Accordingly, the first exemplary pseudocode set forth hereinabove can easily be modified to implement the SIN comparison method using a decision-based frontier progression scheme based on the described criteria. The modified pseudocode for implementing this scheme is set forth below:

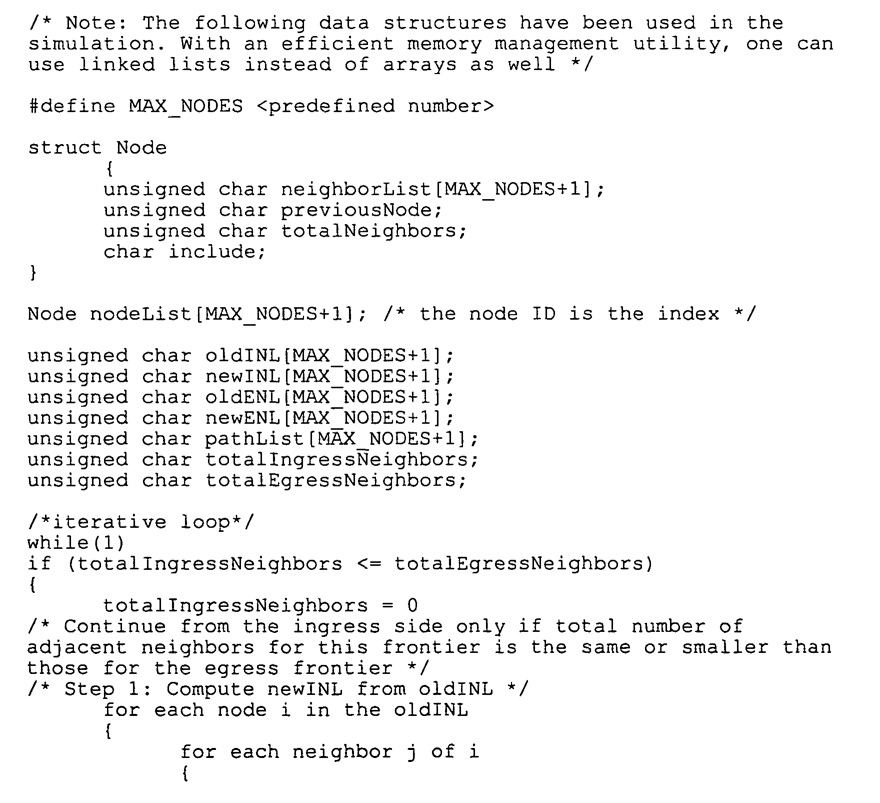

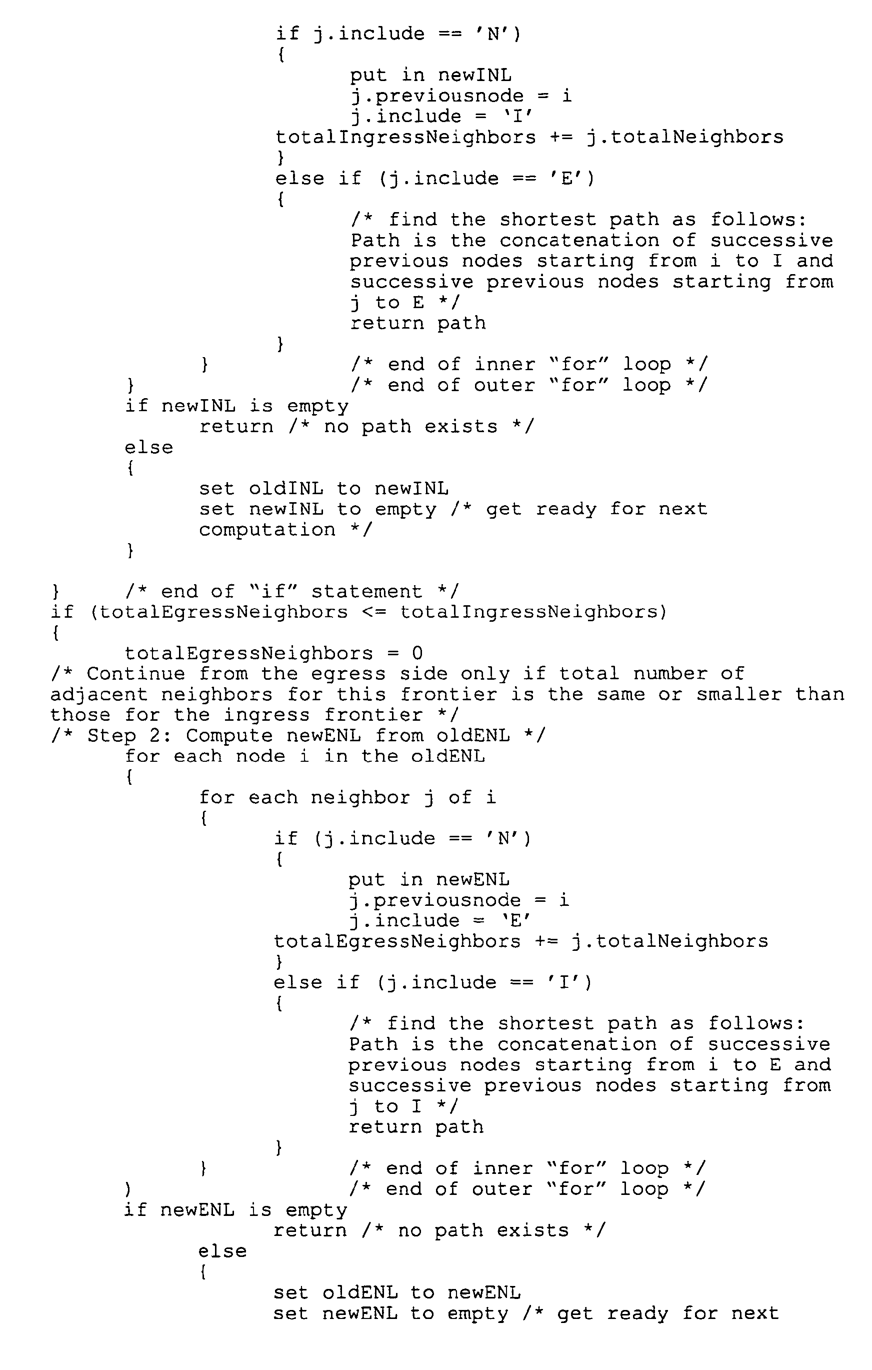

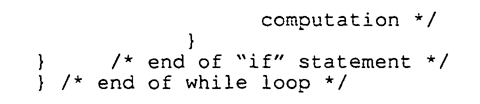

It should be noted that, although only two examples of the criteria for the decision-based frontier progression scheme of the SIN comparison method have been described herein, this method is equally applicable to any criteria on which the decision to advance the frontier from a given side is based.

It should also be noted that, although the SIN comparison method described herein has been described with respect to a digital communications network, the method may be equally applicable to any other type of topology of nodes, or points, interconnected by links through which a shortest path between two of the nodes, or points, must be determined. For example, the network may be all-optical, all-electronic, or any combination of the two or any topology comprising nodes connected via equal-cost links. Moreover, the term "node" as used herein refers to a network element or to a data object in a data base, for example.

Based upon the foregoing Detailed Description, it should be readily apparent that the present invention advantageously provides an innovative and efficient solution for determining the shortest path between a given pair of nodes in an equal cost link network. In particular, as described above, by expanding the neighbor frontier consistently by one hop from each side, the method described herein can correctly deduce that when the first node of the opposite side is detected, the shortest path is found. The shortest path is then calculated by concatenating the paths from the end nodes to the overlapping node.

There are three fundamental differences between the method described herein and algorithms based on Dijkstra's SPF. First, the SIN comparison method searches simultaneously from both sides allowing for the shortest path computation to be tailored for the given pair of nodes only, thereby achieving greater efficiency. In contrast, Dijkstra's SPF calculates the shortest path between the given nodes and all nodes in the network. Second, Dijkstra's SPF can be used to solve the problem by using some constant value for the "cost" of a link; however, it is cumbersome with respect to the needs of the particular problem at hand. The SIN comparison method eliminates the "cost" computation altogether and approaches exclusively from the perspective of inclusion or exclusion of neighbors with efficient tagging. The computational complexity of Dijkstra's SPF is O(N²+E) versus O(N+E) for the SIN comparison method solution, where N is the total number of nodes and E is the total number of links in the network. Third, the SIN comparison method has the explicit condition of completing the computation of one frontier before starting the next one, whereas Dijkstra's SPF does not have this explicit condition. The actual number of iterative loops for the SIN comparison method described herein is approximately half the total number of hops of the shortest path.

It is believed that the operation and construction of the present invention will be apparent from the foregoing Detailed Description. While the exemplary embodiments of the invention shown and described have been characterized as being preferred, it should be readily understood that various changes and modifications could be made therein without departing from the scope of the present invention as set forth in the following claims.

## Claims

1. A method of finding a shortest path between a first node and a second node in a network, the method comprising the steps of:
initializing a first neighbor set to include the first node;
initializing a second neighbor set to include the second node;
determining a new first neighbor set including all nodes adjacent to each node of the previous first neighbor set;
for each node in the new first neighbor set, determining whether the node has been included in the second neighbor set and if so, determining a path from the first node to the second node through the node and if not, determining a new second neighbor set including all nodes adjacent to the second node; and
for each node in the new second neighbor set, determining whether the node has been included in the first neighbor set and if so, determining a path from the first node to the second node through the node and if not, returning to the step of determining a new first neighbor set.

2. The method of claim 5 further comprising the steps of:
flagging each node of the new first neighbor with a first value; and
flagging each node of the new second neighbor set with a second value.

3. The method of claim 6 wherein the step of, for each node in the new first neighbor set, determining whether the node has been included in the second neighbor set further comprises the step of determining whether the node is flagged with the second value.

4. The method of claim 6 wherein the step of, for each node in the new second neighbor set, determining whether the node has been included in the first neighbor set further comprises the step of determining whether the node is flagged with the first value.

5. The method of claim 6 further comprising the steps of:
for each node of the previous first neighbor set, setting a variable of a node determined to be adjacent thereto to identify the node of the previous first neighbor set; and
for each node of the previous second neighbor set, setting a variable of a node determined to be adjacent thereto to identify the node of the previous second neighbor set.

6. The method of claim 10 wherein the first node is an ingress node and the second node is an egress node.

7. A system for finding a shortest path between a first node and a second node in a network, wherein a first set of nodes initially includes the first node and a second set of nodes initially includes the second node, the system comprising:
means for determining a new first set of nodes comprising all nodes adjacent to each node in the previous first set of nodes;
means for determining a new second set of nodes comprising all nodes adjacent to each node in the previous second set of nodes;
means for determining whether the new first and second sets of nodes include a node in common;
means for selecting a path from the first node to the second node through the node in common if the new first and second sets of nodes include a node in common; and
means for repeating the steps of determining until a node in common is determined if the new first and second sets of nodes do not include a node in common.

8. The system of claim 15 further comprising:
means for terminating execution of the step of repeating if either one of the sets of nodes is empty.

9. The system of claim 15 wherein the first node is an ingress node and the second node is an egress node.

10. The system of claim 15 wherein the network is an equal cost link digital communications network.
